# EUROPÄISCHE PATENTANMELDUNG

(11) **EP 4 477 341 A2**
(43) Veröffentlichungstag der Anmeldung: **18.12.2024**
(21) Anmeldenummer: 24181721.2
(22) Anmeldetag: 12.06.2024
(51) Int. Cl.: B23D 29/00, B23D 35/00, A62B 3/00, B23Q 11/00

(54) **SCHNEIDGERÄT**

(30) Priorität: 15.06.2023 AT 504722023
(71) Anmelder: WEBER-HYDRAULIK GMBH, 4460 Losenstein (AT)
(72) Erfinder: AIGNER, Michael, 4462 Reichraming (AT)
(74) Vertreter: Burger, Hannes

(57) **Zusammenfassung**

Die Erfindung betrifft ein Schneidgerät (1) umfassend:
- einen Trägerkörper (2);
- einen ersten Werkzeugarm (3), wobei am ersten Werkzeugarm (3) eine erste Schneide (9) angeordnet ist;
- einen zweiten Werkzeugarm (4), wobei am zweiten Werkzeugarm (4) eine zweite Schneide (11) angeordnet ist;
- einen Aktor (12) zum Bewegen des ersten Werkzeugarmes (3) und des zweiten Werkzeugarmes (4) relativ zueinander.

Die erste Schneide (9) ist an einem ersten Längsende (8) des ersten Werkzeugarmes (3) angeordnet, wobei eine erste Schneidkante (13) der ersten Schneide (9) in einem ersten Winkel (15) zwischen 0° und 45° zur ersten Schwenkachse (5) liegt und die zweite Schneide (11) ist an einem ersten Längsende (10) des zweiten Werkzeugarmes (4) angeordnet, wobei eine zweite Schneidkante (14) der zweiten Schneide (11) in einem zweiten Winkel (16) zwischen 0° und 45° zur zweiten Schwenkachse (6) liegt.

## Beschreibung

Die Erfindung betrifft ein Schneidgerät.

Die WO2021213675A1 offenbart ein Tragbares Schneidgerät. Das Schneidgerät weist einen ersten Werkzeugarm mit einer ersten Schneide und einen zweiten Werkzeugarm mit einer zweiten Schneide auf. Der erste Werkzeugarm und der zweite Werkzeugarm sind um eine Schwenkachse schwenkbar an einem Trägerkörper gelagert. Die erste Schneide und die zweite Schneide sind in einem Winkel von 90° zur Schwenkachse angeordnet.

Das aus der WO2021213675A1 bekannte Schneidgerät weist den Nachteil auf, dass beim Schneiden eines gegenüber flachen Bauteiloberflächen vorstehenden Schnittteiles der Schnitt im Schnittteil einen Mindestabstand zur Bauteiloberfläche aufweisen muss. Mit anderen Worten ausgedrückt kann nicht bündig mit der Bauteiloberfläche abgeschnitten werden.

Aufgabe der vorliegenden Erfindung war es, die Nachteile des Standes der Technik zu überwinden und ein Schneidgerät zur Verfügung zu stellen, mittels dem ein verbessertes Schnittergebnis mit Möglichkeit zum bündigen Schneiden erreicht werden kann.

Diese Aufgabe wird durch eine Vorrichtung und ein Verfahren gemäß den Ansprüchen gelöst.

Die Erfindung betrifft ein Schneidgerät umfassend:
- einen Trägerkörper;
- einen ersten Werkzeugarm, welcher um eine erste Schwenkachse schwenkbar am Trägerkörper gelagert ist, wobei am ersten Werkzeugarm eine erste Schneide angeordnet ist;
- einen zweiten Werkzeugarm, welcher um eine zweite Schwenkachse schwenkbar am Trägerkörper gelagert ist, wobei am zweiten Werkzeugarm eine zweite Schneide angeordnet ist;
- einen Aktor zum Bewegen des ersten Werkzeugarmes und des zweiten Werkzeugarmes relativ zueinander.

Die erste Schneide ist an einem ersten Längsende des ersten Werkzeugarmes angeordnet, wobei eine erste Schneidkante der ersten Schneide in einem ersten Winkel zwischen 0° und 45°, insbesondere zwischen 0° und 20°, bevorzugt zwischen 0° und 1°, zur ersten Schwenkachse liegt. Die zweite Schneide ist an einem ersten Längsende des zweiten Werkzeugarmes angeordnet ist, wobei eine zweite Schneidkante der zweiten Schneide in einem ersten Winkel zwischen 0° und 45°, insbesondere zwischen 0° und 20°, bevorzugt zwischen 0° und 1°, zur zweiten Schwenkachse liegt.

Das erfindungsgemäße Schneidgerät bringt den Vorteil mit sich, dass durch die erfindungsgemäße Anordnung der Schneidkanten, ein beispielsweise aus einer Fläche vorstehendes, abzuschneidendes Kabel, möglichst bündig mit der Fläche aus der es vorsteht, abgeschnitten werden kann. Im Gegensatz zu herkömmlichen Schneidwerkzeugen, wie dies aus dem Stand der Technik bekannt ist, kann somit eine bessere Zugänglichkeit der zu schneidenden Objekte erreicht werden.

In einer ersten Ausführungsvariante kann vorgesehen sein, dass die erste Schwenkachse und die zweite Schwenkachse in einem Achsabstand zueinander beabstandet angeordnet sind.

In einer weiteren Ausführungsvariante kann vorgesehen sein, dass die erste Schwenkachse und die zweite Schwenkachse koaxial zueinander angeordnet sind.

Weiters kann es zweckmäßig sein, wenn der erste Werkzeugarm einen ersten Werkzeugarmgrundkörper umfasst, an welchem die Anbindung an den Trägerkörper ausgebildet ist, wobei die erste Schneide an einem ersten Aufsatzelement angeordnet ist, welches lösbar mit dem ersten Werkzeugarmgrundkörper gekoppelt ist und dass der zweite Werkzeugarm einen zweiten Werkzeugarmgrundkörper umfasst, an welchem die Anbindung an den Trägerkörper ausgebildet ist, wobei die zweite Schneide an einem zweiten Aufsatzelement angeordnet ist, welches lösbar mit dem zweiten Werkzeugarmgrundkörper gekoppelt ist. Dies bringt den Vorteil mit sich, dass der Trägerkörper einfach am Werkzeugarm befestigt bzw. ausgetauscht werden kann. Dadurch kann im Verschleißfall eine Wartung des Schneidgerätes erreicht werden. Darüber hinaus kann durch die Ausbildung eines Trägerkörpers die erfindungsgemäße Schneidanordnung an herkömmlichen, bestehenden Werkzeugarmen, wie diese beispielsweise aus dem Stand der Technik bekannt sind, nachgerüstet werden.

Ferner kann vorgesehen sein, dass eine erste Schneidplatte ausgebildet ist, welche mit dem ersten Aufsatzelement gekoppelt ist, wobei die erste Schneide an der ersten Schneidplatte ausgebildet ist und dass eine zweite Schneidplatte ausgebildet ist, welche mit dem zweiten Aufsatzelement gekoppelt ist, wobei die zweite Schneide an der zweiten Schneidplatte ausgebildet ist. Dies bringt den Vorteil mit sich, dass eine Schneidplatte aus einem besonders harten und widerstandsfähigen Werkstoff gebildet sein kann. Insbesondere kann vorgesehen sein, dass eine Schneidplatte durch ein Sinterverfahren hergestellt ist. In einer besonderen Ausführungsvariante kann vorgesehen sein, dass die Schneidplatte aus einer Schneidkeramik gebildet ist.

Weiters kann vorgesehen sein, dass die erste Schneidplatte mittels eines Befestigungsmittels, insbesondere mittels einer Befestigungsschraube mit dem ersten Aufsatzelement gekoppelt ist und dass die zweite Schneidplatte mittels eines Befestigungsmittels, insbesondere mittels einer Befestigungsschraube mit dem zweiten Aufsatzelement gekoppelt ist.

Darüber hinaus kann vorgesehen sein, dass am ersten Werkzeugarm ein Anschlag angeordnet ist, welcher zur Begrenzung eines minimalen Abstandes zwischen der ersten Schneide und der zweiten Schneide dient. Dies bringt den Vorteil mit sich, dass durch diese Maßnahme eine übermäßige Belastung auf die erste Schneide und auf die zweite Schneide hintangehalten werden kann. Somit kann durch diese Maßnahme die Beständigkeit bzw. die Lebensdauer der Schneiden erhöht werden. Insbesondere die Gefahr des Ausbrechens der Schneiden kann durch diese Maßnahmen verringert werden.

Vorteilhaft ist auch eine Ausprägung, gemäß welcher vorgesehen sein kann, dass der Anschlag am ersten Aufsatzelement angeordnet ist. Dies bringt den Vorteil mit sich, dass durch diese Maßnahme ein exaktes Positionieren der Schneiden relativ zueinander erreicht werden kann.

Gemäß einer Weiterbildung ist es möglich, dass der Anschlag verstellbar ist, sodass der minimale Abstand zwischen der ersten Schneide und der zweiten Schneide einstellbar ist. Dies bringt den Vorteil mit sich, dass zum einen eine Erstkonfiguration von neuen Schneiden durchgeführt werden kann. Darüber hinaus kann durch diese Maßnahmen ein Verschleiß der Schneiden ausgeglichen werden, indem der Abstand zum Ausgleich des Verschleißes verringert wird. Außerdem kann durch diese Maßnahmen eine gewünschte Schneidtiefe eingestellt werden, wenn etwa ein zu schneidendes Objekt nicht zur Gänze durchgetrennt werden darf.

Ferner kann es zweckmäßig sein, wenn der erste Werkzeugarmgrundkörper und der zweite Werkzeugarmgrundkörper als formgleiche Bauteile ausgebildet sind. Dies bringt den Vorteil mit sich, dass durch diese Maßnahme die Fertigungskomplexität vermindert wird. Insbesondere durch die gegengleiche Anordnung ist es einfach möglich, formgleiche Bauteile zu verwenden.

Darüber hinaus kann vorgesehen sein, dass am ersten Werkzeugarm seitlich zur ersten Schneide versetzt eine erste Schutzabdeckung angeordnet ist, wobei die erste Schutzabdeckung die erste Schneide in Richtung zur zweiten Schneide hin überragt. Dies bringt den Vorteil mit sich, dass durch diese Maßnahme die Sicherheit erhöht werden kann. Einerseits kann die Gefahr von herumfliegenden Teilen vermindert werden. Außerdem kann die Schneide vor Eingriff durch einen Benutzer geschützt werden. Seitlich versetzt kann auch umschrieben werden mit in Längserstreckung der Schneide betrachtet neben der Schneide angeordnet.

Weiters kann vorgesehen sein, dass am zweiten Werkzeugarm seitlich zur zweiten Schneide versetzt eine zweite Schutzabdeckung angeordnet ist, wobei die zweite Schutzabdeckung die zweite Schneide in Richtung zur ersten Schneide hin überragt, wobei die erste Schneide und die zweite Schneide zwischen der ersten Schutzabdeckung und der zweiten Schutzabdeckung angeordnet sind. Dies bringt den Vorteil mit sich, dass durch diese Maßnahme die Sicherheit erhöht werden kann. Einerseits kann die Gefahr von herumfliegenden Teilen vermindert werden. Außerdem kann die Schneide vor Eingriff durch einen Benutzer geschützt werden. Darüber hinaus kann durch diese Maßnahme ein geschlossener Raum mit einem allseitigen Schutz - bis auf die von vorne zugängliche Schneide - erreicht werden.

Gemäß einer besonderen Ausprägung ist es möglich, dass am ersten Werkzeugarm ein erster Begrenzungsschutz angeordnet ist, wobei sich der erste Begrenzungsschutz über die Breite des ersten Werkzeugarmes erstreckt und wobei der erste Begrenzungsschutz zwischen der ersten Schneide und der ersten Schwenkachse angeordnet ist. Dies bringt den Vorteil mit sich, dass durch diese Maßnahme die Sicherheit erhöht werden kann. Einerseits kann die Gefahr von herumfliegenden Teilen vermindert werden. Außerdem kann die Schneide vor Eingriff durch einen Benutzer geschützt werden. Darüber hinaus kann durch diese Maßnahme ein geschlossener Raum mit einem allseitigen Schutz - bis auf die von vorne zugängliche Schneide - erreicht werden.

Entsprechend einer vorteilhaften Weiterbildung kann vorgesehen sein, dass am zweiten Werkzeugarm ein zweiter Begrenzungsschutz angeordnet ist, wobei sich der zweite Begrenzungsschutz über die Breite des zweiten Werkzeugarmes erstreckt und wobei der zweite Begrenzungsschutz zwischen der zweiten Schneide und der zweiten Schwenkachse angeordnet ist, wobei in einem geschlossenen Zustand des ersten Werkzeugarmes und des zweiten Werkzeugarmes der erste Begrenzungsschutz zusammen mit dem zweiten Begrenzungsschutz die erste Schneide und zweite Schneide zum Trägerkörper hin abschottet. Dies bringt den Vorteil mit sich, dass durch diese Maßnahme die Sicherheit erhöht werden kann. Einerseits kann die Gefahr von herumfliegenden Teilen vermindert werden. Außerdem kann die Schneide vor Eingriff durch einen Benutzer geschützt werden. Darüber hinaus kann durch diese Maßnahme ein geschlossener Raum mit einem allseitigen Schutz - bis auf die von vorne zugängliche Schneide - erreicht werden.

Insbesondere kann es vorteilhaft sein, wenn der erste Begrenzungsschutz und/oder der zweite Begrenzungsschutz aus einem gummielastischen Werkstoff ausgebildet ist. Dies bringt den Vorteil mit sich, dass durch diese Maßnahme ein dichtes Verschließen erreicht werden kann und darüber hinaus beim Schließen des Schneidgerätes schon vor der Anlage der beiden Schneiden aneinander der Begrenzungsschutz aneinander anliegen kann, um somit die Schutzwirkung zu erreichen.

Ferner kann vorgesehen sein, dass das Schneidgerät als tragbares Schneidgerät, insbesondere als Rettungsgerät, ausgebildet ist und einen elektromotorischen, einen hydraulischen oder einen elektrohydraulischen Antrieb aufweist. Besonders bei derart tragbaren Schneidgeräten ist die erfindungsgemäße Konfiguration vorteilhaft.

Darüber hinaus kann vorgesehen sein, dass der erste Werkzeugarmgrundkörper als Schneidwerkzeug und/oder Spreizwerkzeug ausgebildet ist, wobei das erste Aufsatzelement mittels zumindest eines ersten Befestigungsmittels, insbesondere mittels einer Befestigungsschraube, mit dem ersten Werkzeugarmgrundkörper gekoppelt ist. Dies bringt den Vorteil mit sich, dass bei einer derartigen Ausprägung ein bestehendes Rettungsgerät nachgerüstet bzw. entsprechend der erfindungsgemäßen Ausbildung adaptiert werden kann. Insbesondere ist es denkbar, dass durch diese Maßnahme ein reines Spreizgerät zu einem Schneidgerät modifiziert werden kann. Darüber hinaus kann durch diese Maßnahme auch ein Kombigerät mit Schneidfunktion und Spreizfunktion mit den Aufsatzelementen ausgestattet werden.

Insbesondere kann vorgesehen sein, dass der der erste Werkzeugarmgrundkörper als Schneidwerkzeug mit einer ersten Grundkörperschneide und der zweite Werkzeugarmgrundkörper als Schneidwerkzeug mit einer zweiten Grundkörperschneide ausgebildet sind, wobei die erste Grundkörperschneide und die zweite Grundkörperschneide in einem Winkel von 90° zur ersten Schwenkachse angeordnet sind.

Vorteilhaft ist auch eine Ausprägung, gemäß welcher vorgesehen sein kann, dass die erste Schneidplatte mittels eines ersten Schneidplattenbefestigungsmittels, insbesondere mittels einer ersten Befestigungsschraube, mit dem ersten Aufsatzelement gekoppelt ist und dass die zweite Schneidplatte mittels eines zweiten Schneidplattenbefestigungsmittels, insbesondere mittels einer zweiten Befestigungsschraube, mit dem zweiten Aufsatzelement gekoppelt ist. Dies bringt den Vorteil mit sich, dass durch diese Maßnahme die Schneidplatten bei Verschleiß einfach ausgetauscht werden können.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht eines ersten Ausführungsbeispiels eines Schneidgerätes;
- Fig. 2: eine perspektivische Ansicht eines zweiten Ausführungsbeispiels des Schneidgerätes;
- Fig. 3: eine stark vereinfachte schematische Darstellung eines dritten Ausführungsbeispiels des Schneidgerätes.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

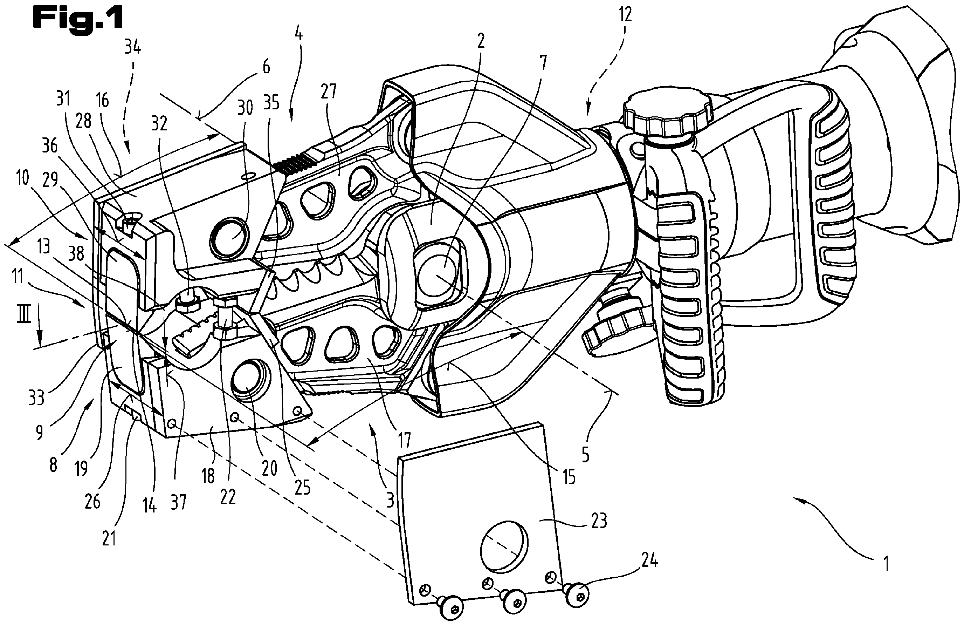

Fig. 1 zeigt in einer perspektivischen Ansicht ein erstes Ausführungsbeispiel eines Schneidgerätes 1. Das Schneidgerät 1 nach Fig. 1 kann beispielsweise als tragbares Schneidgerät ausgebildet sein. Insbesondere ist es denkbar, dass das Schneidgerät 1 nach Fig. 1 als Rettungsgerät ausgebildet ist. Derartige Rettungsgeräte können beispielsweise bei Einsatzorganisationen, wie etwa Feuerwehren, zum Einsatz kommen.

Wie aus Fig. 1 ersichtlich, kann vorgesehen sein, dass das Schneidgerät 1 einen Trägerkörper 2 umfasst. Der Trägerkörper 2 kann als zentrales Bauteil zur Aufnahme eines ersten Werkzeugarmes 3 und eines zweiten Werkzeugarmes 4 dienen. Insbesondere kann vorgesehen sein, dass der erste Werkzeugarm 3 und der zweite Werkzeugarm 4 schwenkbar am Trägerkörper 2 aufgenommen sind.

Insbesondere kann vorgesehen sein, dass der erste Werkzeugarm 3 um eine erste Schwenkachse 5 schwenkbar am Trägerkörper 2 aufgenommen ist. Weiters kann vorgesehen sein, dass der zweite Werkzeugarm 4 um eine zweite Schwenkachse 6 schwenkbar am Trägerkörper 2 aufgenommen ist.

Im vorliegenden Ausführungsbeispiel kann vorgesehen sein, dass die erste Schwenkachse 5 und die zweite Schwenkachse 6 koaxial zueinander ausgebildet sind.

Wie aus Fig. 1 weiters ersichtlich, kann vorgesehen sein, dass ein Schwenkbolzen 7 im Trägerkörper 2 aufgenommen ist, wobei der Schwenkbolzen 7 zur schwenkbaren Lagerung des ersten Werkzeugarmes 3 und des zweiten Werkzeugarmes 4 dient.

Weiters kann vorgesehen sein, dass an einem ersten Längsende 8 des ersten Werkzeugarmes 3 eine erste Schneide 9 ausgebildet ist. Weiters kann vorgesehen sein, dass an einem ersten Längsende 10 des zweiten Werkzeugarmes 4 eine zweite Schneide 11 ausgebildet ist.

Die erste Schneide 9 und die zweite Schneide 11 können in einem geschlossenen Zustand wie er in Fig. 1 dargestellt ist, aneinander anliegen.

Weiters kann ein Aktor 12 vorgesehen sein, welcher zum Schwenken des ersten Werkzeugarmes 3 und des zweiten Werkzeugarmes 4 relativ zueinander dient. Die Werkzeugarme können 3, 4 zwischen der Geschlossenstellung, wie sie in Fig. 1 dargestellt ist, und einer Offenstellung, in welcher die erste Schneide 9 und die zweite Schneide 11 zueinander beabstandet sind, verschwenkbar sein.

Wie aus Fig. 1 weiters ersichtlich, weist die erste Schneide 9 eine erste Schneidkante 13 auf, die zweite Schneide 11 weist eine zweite Schneidkante 14 auf. Insbesondere kann vorgesehen sein, dass die erste Schneidkante 13 und die zweite Schneidkante 14 jeweils in Form von geraden Schneidkanten ausgebildet sind.

Weiters kann vorgesehen sein, dass die erste Schneidkante 13 in einem ersten Winkel 15 zur ersten Schwenkachse 5 angeordnet ist. Darüber hinaus kann vorgesehen sein, dass die zweite Schneidkante 14 in einem zweiten Winkel 16 zur zweiten Schwenkachse 6 angeordnet ist. Der erste Winkel 15 und der zweite Winkel 16 können gleich groß sein. Im vorliegenden Ausführungsbeispiel liegen die erste Schneidkante 13 und die zweite Schneidkante 14 parallel zur ersten Schwenkachse 5 bzw. zur zweiten Schwenkachse 6. Der erste Winkel 15 bzw. der zweite Winkel 16 sind im vorliegenden Ausführungsbeispiel somit gleich Null Grad.

Wie aus Fig. 1 weiters ersichtlich, kann vorgesehen sein, dass der erste Werkzeugarm 3 einen ersten Werkzeugarmgrundkörper 17 umfasst. Am ersten Werkzeugarmgrundkörper 17 kann ein erstes Aufsatzelement 18 angeordnet sein. Weiters kann vorgesehen sein, dass am ersten Aufsatzelement 18 eine erste Schneidplatte 19 angeordnet ist. Die erste Schneide 9 kann hierbei an der ersten Schneidplatte 19 ausgebildet sein.

Insbesondere kann vorgesehen sein, dass das erste Aufsatzelement 18 mittels eines ersten Befestigungsmittels 20 am ersten Werkzeugarmgrundkörper 17 befestigt ist. Das erste Befestigungsmittel 20 kann beispielsweise in Form eines Befestigungsbolzens oder in Form einer Befestigungsschraube ausgebildet sein.

Weiters kann vorgesehen sein, dass die erste Schneidplatte 19 mittels eines ersten Schneidplattenbefestigungsmittels 21 am ersten Aufsatzelement 18 befestigt ist. Das erste Schneidplattenbefestigungsmittel 21 kann beispielsweise in Form einer Befestigungsschraube ausgebildet sein.

Weiters kann vorgesehen sein, dass am ersten Werkzeugarm 3 ein erster Anschlag 22 ausgebildet ist, welcher zur Begrenzung der Schließbewegung des ersten Werkzeugarmes 3 dienen kann.

Wie aus Fig. 1 ersichtlich, kann vorgesehen sein, dass der erste Anschlag 22 am ersten Aufsatzelement 18 angeordnet ist. Insbesondere kann vorgesehen sein, dass der erste Anschlag 22 mit dem zweiten Werkzeugarm 4 zusammenwirkt.

Weiters kann vorgesehen sein, dass am ersten Werkzeugarm 3 eine erste Schutzabdeckung 23 angeordnet ist. Die erste Schutzabdeckung 23 kann am ersten Aufsatzelement 18 befestigt sein. Insbesondere kann vorgesehen sein, dass die erste Schutzabdeckung 23 seitlich am ersten Aufsatzelement 18 aufgeschraubt ist. Insbesondere kann die erste Schutzabdeckung 23 mit ersten Schutzabdeckungsschrauben 24 am ersten Aufsatzelement 18 befestigt sein.

Weiters kann vorgesehen sein, dass am ersten Aufsatzelement 18 ein erster Begrenzungsschutz 25 ausgebildet ist. Der erste Begrenzungsschutz 25 kann sich parallel zur ersten Schneidkante 13 erstrecken. Insbesondere kann vorgesehen sein, dass sich der erste Begrenzungsschutz 25 über eine Breite 26 des ersten Werkzeugarmes 3, insbesondere des ersten Aufsatzelementes 18 erstreckt.

Wie aus Fig. 1 weiters ersichtlich, kann vorgesehen sein, dass der zweite Werkzeugarm 4 einen zweiten Werkzeugarmgrundkörper 27 umfasst. Am zweiten Werkzeugarmgrundkörper 27 kann ein zweites Aufsatzelement 28 angeordnet sein. Weiters kann vorgesehen sein, dass am zweiten Aufsatzelement 28 eine zweite Schneidplatte 29 angeordnet ist. Die zweite Schneide 11 kann hierbei an der zweiten Schneidplatte 29 ausgebildet sein.

Insbesondere kann vorgesehen sein, dass das zweite Aufsatzelement 28 mittels eines zweiten Befestigungsmittels 30 am zweiten Werkzeugarmgrundkörper 27 befestigt ist. Das zweite Befestigungsmittel 30 kann beispielsweise in Form eines Befestigungsbolzens oder in Form einer Befestigungsschraube ausgebildet sein.

Weiters kann vorgesehen sein, dass die zweite Schneidplatte 29 mittels eines zweiten Schneidplattenbefestigungsmittels 31 am zweiten Aufsatzelement 28 befestigt ist. Das zweite Schneidplattenbefestigungsmittel 31 kann beispielsweise in Form einer Befestigungsschraube ausgebildet sein.

Weiters kann vorgesehen sein, dass am zweiten Werkzeugarm 4 ein zweiter Anschlag 32 ausgebildet ist, welcher zur Begrenzung der Schließbewegung des zweiten Werkzeugarmes 4 dienen kann.

Wie aus Fig. 1 ersichtlich, kann vorgesehen sein, dass der zweite Anschlag 32 am zweiten Aufsatzelement 28 angeordnet ist. Insbesondere kann vorgesehen sein, dass der zweite Anschlag 32 mit dem ersten Werkzeugarm 3 zusammenwirkt.

Weiters kann vorgesehen sein, dass am zweiten Werkzeugarm 4 eine zweite Schutzabdeckung 33 angeordnet ist. Die zweite Schutzabdeckung 33 kann am zweiten Aufsatzelement 28 befestigt sein. Insbesondere kann vorgesehen sein, dass die zweite Schutzabdeckung 33 seitlich am zweiten Aufsatzelement 28 aufgeschraubt ist. Insbesondere kann die zweite Schutzabdeckung 33 mit zweiten Schutzabdeckungsschrauben 34 am zweiten Aufsatzelement 28 befestigt sein.

Weiters kann vorgesehen sein, dass am zweiten Aufsatzelement 28 ein zweiter Begrenzungsschutz 35 ausgebildet ist. Der zweite Begrenzungsschutz 35 kann sich parallel zur zweiten Schneidkante 14 erstrecken. Insbesondere kann vorgesehen sein, dass sich der zweite Begrenzungsschutz 35 über eine Breite 36 des zweiten Werkzeugarmes 4, insbesondere des zweiten Aufsatzelementes 28 erstreckt.

Wie besonders gut aus Fig. 1 ersichtlich, kann vorgesehen sein, dass der erste Anschlag 22 und der zweite Anschlag 32 in Axialrichtung der ersten Schwenkachse 5 bzw. der zweiten Schwenkachse 6 zueinander beabstandet angeordnet sind. Durch das Vorsehen des ersten Anschlages 22 und des zweiten Anschlages 32 kann eine erhöhte Stabilität beim Schließen des ersten Werkzeugarmes 3 und des zweiten Werkzeugarmes 4 erreicht werden. Durch die beiden Anschläge 22, 32 kann ein Abstand 37 zwischen der ersten Schneide 9 und der zweiten Schneide 11 eingestellt werden.

Wie aus Fig. 1 weiters ersichtlich, kann ein Werkstückaufnahmeraum 38 ausgebildet sein, welcher zur Aufnahme des abgeschnittenen Werkstückes dient. Im geschlossenen Zustand des ersten Werkzeugarmes 3 und des zweiten Werkzeugarmes 4 kann der Werkstückaufnahmeraum 38 vorne durch die erste Schneide 9 und die zweite Schneide 11 begrenzt sein, seitlich durch die erste Schutzabdeckung 23 und durch die zweite Schutzabdeckung 33 begrenzt sein und den Schwenkachsen 5, 6 zugewandt, durch den ersten Begrenzungsschutz 25 und den zweiten Begrenzungsschutz 35 begrenzt sein.

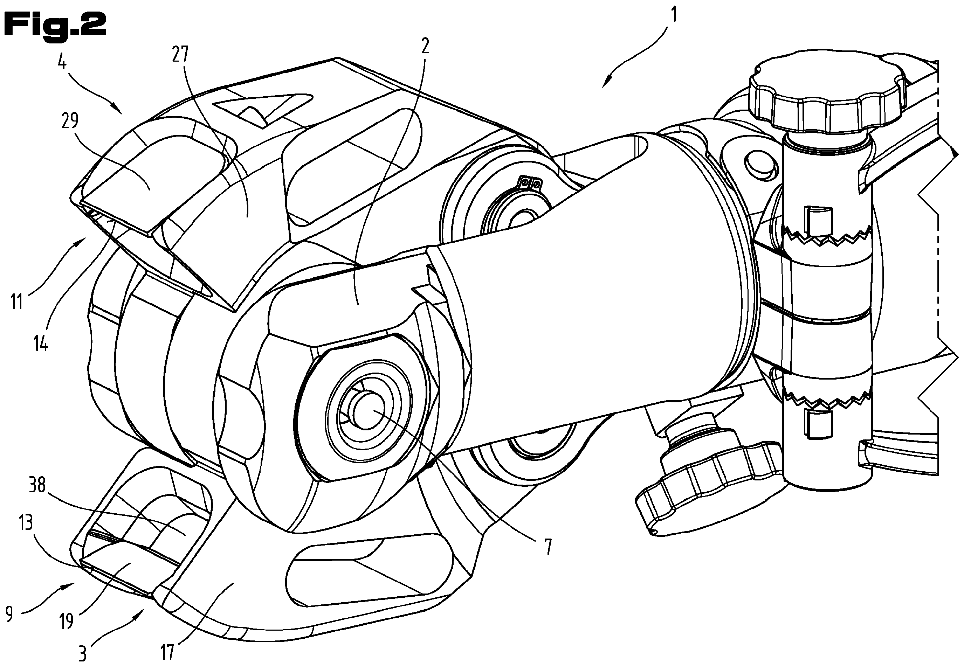

In der Fig. 2 ist eine weitere und gegebenenfalls für sich eigenständige Ausführungsform des Schneidgerätes 1 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

Wie aus Fig. 2 ersichtlich, kann vorgesehen sein, dass der erste Werkzeugarmgrundkörper 17 direkt zur Aufnahme der ersten Schneidplatte 19 dient. Weiters kann vorgesehen sein, dass der zweite Werkzeugarmgrundkörper 27 direkt zur Aufnahme der zweiten Schneidplatte 29 dient. Die Werkzeugarmgrundkörper 17, 27 können hierbei im geschlossenen Zustand des ersten Werkzeugarmes 3 und des zweiten Werkzeugarmes 4 aneinander anliegen, wodurch ein minimaler Abstand 37 der ersten Schneide 9 und der zweiten Schneide 11 zueinander festgelegt werden kann. Im Ausführungsbeispiel der Fig. 2 ist der erste Werkzeugarm 3 und der zweite Werkzeugarm 4 in der geöffneten Stellung dargestellt.

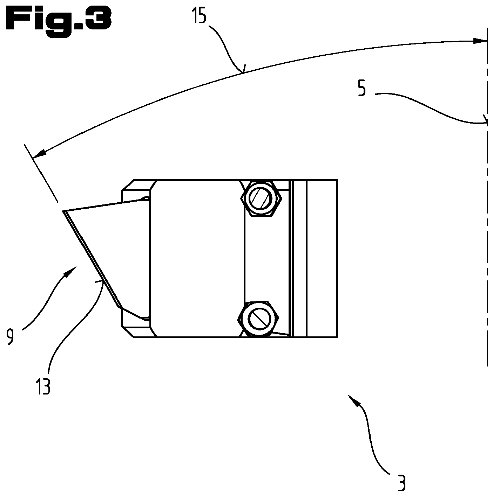

In der Fig. 3 ist eine weitere und gegebenenfalls für sich eigenständige Ausführungsform des Schneidgerätes 1 gezeigt, wobei wiederum für gleiche Teile gleiche Bezugszeichen bzw. Bauteilbezeichnungen wie in den vorangegangenen Fig. 1 und 2 verwendet werden. Um unnötige Wiederholungen zu vermeiden, wird auf die detaillierte Beschreibung in den vorangegangenen Fig. 1 und 2 hingewiesen bzw. Bezug genommen.

Fig. 3 zeigt ein drittes Ausführungsbeispiel des Schneidgerätes, wobei in einer stark schematischen Darstellung ein Werkzeugarm 3 in einer Draufsicht gemäß der Ansichtsdarstellung III - III aus Fig. 1 dargestellt ist. Wie aus Fig. 3 ersichtlich, kann vorgesehen sein, dass die erste Schneidkante 13 im ersten Winkel 15 zur ersten Schwenkachse 5 angeordnet ist, wobei der erste Winkel 15 nicht Null Grad ist, sondern größer Null Grad, beispielsweise 40° beträgt. Auch bei einem derartigen Ausführungsbeispiel können die erste Schneidkante 13 und die zweite Schneidkante 14 parallel zueinander verlaufen, wobei dementsprechend der zweite Winkel 16 gleich groß wie der erste Winkel 15 sein kann.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Schneidgerät | 29 | zweite Schneidplatte |
| 2 | Trägerkörper | 30 | zweites Befestigungsmittel |
| 3 | erster Werkzeugarm | 31 | zweites Schneidplattenbefestigungsmittel |
| 4 | zweiter Werkzeugarm | | |
| 5 | erste Schwenkachse | 32 | zweiter Anschlag |
| 6 | zweite Schwenkachse | 33 | zweite Schutzabdeckung |
| 7 | Schwenkbolzen | 34 | zweite Schutzabdeckungsschrauben |
| 8 | erstes Längsende erster Werkzeugarm | | |
| | | 35 | zweiter Begrenzungsschutz |
| 9 | erste Schneide | 36 | Breite zweiter Werkzeugarm |
| 10 | erstes Längsende zweiter Werkzeugarm | 37 | Abstand |
| | | 38 | Werkstückaufnahmeraum |
| 11 | zweite Schneide | | |
| 12 | Aktor | | |
| 13 | erste Schneidkante | | |
| 14 | zweite Schneidkante | | |
| 15 | erster Winkel | | |
| 16 | zweiter Winkel | | |
| 17 | erster Werkzeugarmgrundkörper | | |
| 18 | erstes Aufsatzelement | | |
| 19 | erste Schneidplatte | | |
| 20 | erstes Befestigungsmittel | | |
| 21 | erstes Schneidplattenbefestigungsmittel | | |
| 22 | erster Anschlag | | |
| 23 | erste Schutzabdeckung | | |
| 24 | erste Schutzabdeckungsschrauben | | |
| 25 | erster Begrenzungsschutz | | |
| 26 | Breite erster Werkzeugarm | | |
| 27 | zweiter Werkzeugarmgrundkörper | | |
| 28 | zweites Aufsatzelement | | |

## Patentansprüche

1. Schneidgerät (1) umfassend:
- einen Trägerkörper (2);
- einen ersten Werkzeugarm (3), welcher um eine erste Schwenkachse (5) schwenkbar am Trägerkörper (2) gelagert ist, wobei am ersten Werkzeugarm (3) eine erste Schneide (9) angeordnet ist;
- einen zweiten Werkzeugarm (4), welcher um eine zweite Schwenkachse (6) schwenkbar am Trägerkörper (2) gelagert ist, wobei am zweiten Werkzeugarm (4) eine zweite Schneide (11) angeordnet ist;
- einen Aktor (12) zum Bewegen des ersten Werkzeugarmes (3) und des zweiten Werkzeugarmes (4) relativ zueinander,
**dadurch gekennzeichnet, dass**
die erste Schneide (9) an einem ersten Längsende (8) des ersten Werkzeugarmes (3) angeordnet ist, wobei eine erste Schneidkante (13) der ersten Schneide (9) in einem ersten Winkel (15) zwischen 0° und 45°, insbesondere zwischen 0° und 20°, bevorzugt zwischen 0° und 1°, zur ersten Schwenkachse (5) liegt und die zweite Schneide (11) an einem ersten Längsende (10) des zweiten Werkzeugarmes (4) angeordnet ist, wobei eine zweite Schneidkante (14) der zweiten Schneide (11) in einem zweiten Winkel (16) zwischen 0° und 45°, insbesondere zwischen 0° und 20°, bevorzugt zwischen 0° und 1°, zur zweiten Schwenkachse (6) liegt.

2. Schneidgerät (1) nach Anspruch 1, **dadurch gekennzeichnet, dass** der erste Werkzeugarm (3) einen ersten Werkzeugarmgrundkörper (17) umfasst, an welchem die Anbindung an den Trägerkörper (2) ausgebildet ist, wobei die erste Schneide (9) an einem ersten Aufsatzelement (18) angeordnet ist, welches lösbar mit dem ersten Werkzeugarmgrundkörper (17) gekoppelt ist und dass der zweite Werkzeugarm (4) einen zweiten Werkzeugarmgrundkörper (27) umfasst, an welchem die Anbindung an den Trägerkörper (2) ausgebildet ist, wobei die zweite Schneide (11) an einem zweiten Aufsatzelement (28) angeordnet ist, welches lösbar mit dem zweiten Werkzeugarmgrundkörper (27) gekoppelt ist.

3. Schneidgerät (1) nach Anspruch 2, **dadurch gekennzeichnet, dass** eine erste Schneidplatte (19) ausgebildet ist, welche mit dem ersten Aufsatzelement (18) gekoppelt ist, wobei die erste Schneide (9) an der ersten Schneidplatte (19) ausgebildet ist und dass eine zweite Schneidplatte (29) ausgebildet ist, welche mit dem zweiten Aufsatzelement (28) gekoppelt ist, wobei die zweite Schneide (11) an der zweiten Schneidplatte (29) ausgebildet ist.

4. Schneidgerät (1) nach einem der vorhergehenden Ansprüche, **dadurch gekennzeichnet, dass** am ersten Werkzeugarm (3) ein Anschlag (22) angeordnet ist, welcher zur Begrenzung eines minimalen Abstandes (37) zwischen der ersten Schneide (9) und der zweiten Schneide (11) dient.

5. Schneidgerät (1) nach Anspruch 2 und 4 oder 3 und 4, **dadurch gekennzeichnet, dass** der Anschlag (22) am ersten Aufsatzelement (18) angeordnet ist.

6. Schneidgerät (1) nach Anspruch 4 oder 5, **dadurch gekennzeichnet, dass** der Anschlag (22) verstellbar ist, sodass der minimale Abstand (37) zwischen der ersten Schneide (9) und der zweiten Schneide (11) einstellbar ist.

7. Schneidgerät (1) nach einem der Ansprüche 2 bis 6, **dadurch gekennzeichnet, dass** der erste Werkzeugarmgrundkörper (17) und der zweite Werkzeugarmgrundkörper (27) als formgleiche Bauteile ausgebildet sind.

8. Schneidgerät (1) nach einem der Ansprüche 2 bis 7, **dadurch gekennzeichnet, dass** am ersten Werkzeugarm (3) seitlich zur ersten Schneide (9) versetzt eine erste Schutzabdeckung (23) angeordnet ist, wobei die erste Schutzabdeckung (23) die erste Schneide (9) in Richtung zur zweiten Schneide (11) hin überragt.

9. Schneidgerät (1) nach Anspruch 8, **dadurch gekennzeichnet, dass** am zweiten Werkzeugarm (4) seitlich zur zweiten Schneide (11) versetzt eine zweite Schutzabdeckung (33) angeordnet ist, wobei die zweite Schutzabdeckung (33) die zweite Schneide (11) in Richtung zur ersten Schneide (9) hin überragt, wobei die erste Schneide (9) und die zweite Schneide (11) zwischen der ersten Schutzabdeckung (23) und der zweiten Schutzabdeckung (33) angeordnet sind.

10. Schneidgerät (1) nach einem der vorhergehenden Ansprüche, **dadurch gekennzeichnet, dass** am ersten Werkzeugarm (3) ein erster Begrenzungsschutz (25) angeordnet ist, wobei sich der erste Begrenzungsschutz (25) über die Breite (26) des ersten Werkzeugarmes (3) erstreckt und wobei der erste Begrenzungsschutz (25) zwischen der ersten Schneide (9) und der ersten Schwenkachse (5) angeordnet ist.

11. Schneidgerät (1) nach Anspruch 10, **dadurch gekennzeichnet, dass** am zweiten Werkzeugarm (4) ein zweiter Begrenzungsschutz (35) angeordnet ist, wobei sich der zweite Begrenzungsschutz (35) über die Breite (36) des zweiten Werkzeugarmes (4) erstreckt und wobei der zweite Begrenzungsschutz (35) zwischen der zweiten Schneide (11) und der zweiten Schwenkachse (6) angeordnet ist, wobei in einem geschlossenen Zustand des ersten Werkzeugarmes (3) und des zweiten Werkzeugarmes (4) der erste Begrenzungsschutz (25) zusammen mit dem zweiten Begrenzungsschutz (35) die erste Schneide (9) und zweite Schneide (11) zum Trägerkörper (2) hin abschottet.

12. Schneidgerät (1) nach einem der Ansprüche 10 oder 11, **dadurch gekennzeichnet, dass** der erste Begrenzungsschutz (25) und/oder der zweite Begrenzungsschutz (35) aus einem gummielastischen Werkstoff ausgebildet ist.

13. Schneidgerät (1) nach einem der vorhergehenden Ansprüche, **dadurch gekennzeichnet, dass** dieses als tragbares Schneidgerät (1), insbesondere als Rettungsgerät, ausgebildet ist und einen elektromotorischen, einen hydraulischen oder einen elektrohydraulischen Antrieb aufweist.

14. Schneidgerät (1) nach einem der Ansprüche 2 bis 13, **dadurch gekennzeichnet, dass** der erste Werkzeugarmgrundkörper (17) als Schneidwerkzeug und/oder Spreizwerkzeug ausgebildet ist, wobei das erste Aufsatzelement (18) mittels zumindest eines ersten Befestigungsmittels (20), insbesondere mittels einer Befestigungsschraube, mit dem ersten Werkzeugarmgrundkörper (17) gekoppelt ist.

15. Schneidgerät (1) nach einem der Ansprüche 3 bis 14, **dadurch gekennzeichnet, dass** die erste Schneidplatte (19) mittels eines ersten Schneidplattenbefestigungsmittels (21), insbesondere mittels einer ersten Befestigungsschraube, mit dem ersten Aufsatzelement (18) gekoppelt ist und dass die zweite Schneidplatte (29) mittels eines zweiten Schneidplattenbefestigungsmittels (31), insbesondere mittels einer zweiten Befestigungsschraube, mit dem zweiten Aufsatzelement (28) gekoppelt ist.
